# FASCICULE DE BREVET EUROPEEN

(11) **EP 0 608 169 B1**
(45) Date de publication et mention de la délivrance du brevet: **20.05.1998**
(21) Numéro de dépôt: 94400100.7
(22) Date de dépôt: 14.01.1994
(51) Int. Cl.: G02B 7/00, G03B 11/00, G03B 17/12

(54) **Elément de support d'objets à placer sur une ligne de rayonnement, et support composé de tels éléments**
Objektträgerelement in einem Strahlungsbündel und Trägerelement, das hauptsächlich von derartigen Elementen aufgebaut ist
Mounting for supporting elements to be placed in a radiation beam and supporting element composed of these elements

(30) Priorité: 18.01.1993 FR 9300405
(43) Date de publication de la demande: 27.07.1994
(73) Titulaire: COMMISSARIAT A L'ENERGIE ATOMIQUE, 75015 Paris (FR)
(72) Inventeur: Menil, Albert, F-33113 Saint Symphorien (FR)
(74) Mandataire: Ilgart, Jean-Christophe

(56) Documents cités:
- DE-A- 2 912 226
- JP-A- 1 096 612
- US-A- 2 660 926
- US-A- 4 597 643
- US-A- 4 614 316

## Description

L'invention se rapporte à un élément de support d'objets à placer sur une ligne de rayonnement ainsi qu'à un support d'objets composé en particulier de tels éléments.

On éprouve souvent le besoin de placer sur une ligne de rayonnement lumineux ou autre des objets tels que des filtres, des lentilles, des cuves d'analyse ou des échantillons en assez grand nombre, ce qui pose alors des problèmes pour les placer rapidement et sans effort à des orientations et des positions satisfaisantes.

Les porte-filtres déjà connus comportent un cadre muni de ressorts à lames pour plaquer le filtre ou un élément semblable sur le cadre, ou un ensemble de rainures semi-circulaires, séparées par des rebords, dans chacune desquelles un filtre est glissé, mais il faut que la rainure ait une largeur supérieure à l'épaisseur du filtre, ce qui impose en pratique que toutes les rainures soient assez larges car les filtres ont des épaisseurs variables. Un allongement sensible du porte-filtres ou du support d'objets constitué d'un empilement de porte-filtres est la conséquence de cette situation.
Le brevet JP-A-1 966 12 décrit un cadre évidé par une portion en creux pour recevoir un élément optique et équipé de vis pour régler angulairement et axialement la position de l'élément optique dans le cadre.

Par ailleurs, le brevet US-A-4 597 643 décrit un cadre de support de lentille à gradin unique pour retenir la lentille d'un côté et à rainure pour recevoir un anneau qui retient la lentille de l'autre côté.

L'invention a pour objet avant tout l'élément de support d'objects défini dans la revendication 1, sur lequel plusieur objets peuvent être placés avec un encombrement minimal en épaisseur. Cet élément est composé d'un cadre muni d'une portion en creux, évidée à travers le cadre ; ladite portion est délimitée par une surface du cadre formée d'une succession de gradins étagés, de sorte que la portion évidée s'élargit d'une face d'extrémité du cadre à l'autre à travers l'épaisseur du cadre, et elle est telle que les gradins ont une forme semi-circulaire et une hauteur, mesurée entre gradins et perpendiculairement à la ligne de rayonnement, maximale au fond de la portion évidée et minimale près de la portion entaillée du pourtour du cadre.

L'invention concerne également le support d'objets défini dans la revendication 3, composé d'au moins un de ces éléments et d'au moins une plaquette à portion évidée à une extrémité du support. Les éléments et les plaquettes sont empilés de façon que les portions évidées soient en prolongement, et des boulons s'étendent à travers des perçages périphériques en prolongement des éléments et des plaquettes.

L'invention va maintenant être décrite plus en détail à l'aide des figures suivantes annexées à titre illustratif et non limitatif :
- la figure 1 représente un élément de support muni de plaquettes ajourées, et
- la figure 2 représente un support d'objets complexe.

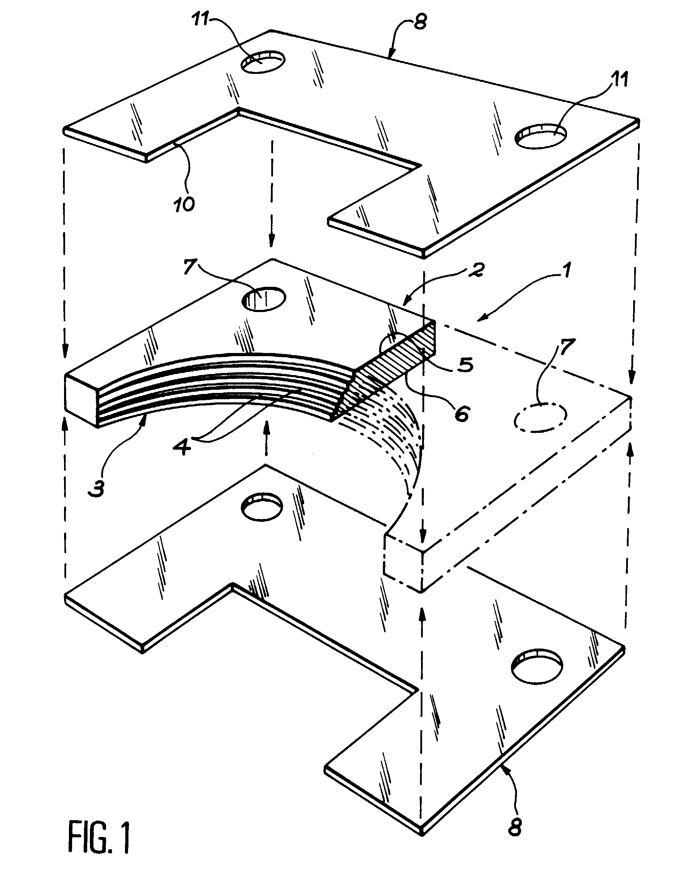

L'élément de support 1 de la figure 1 est donc composé d'un cadre 2 dont le pourtour extérieur est rectangulaire si ce n'est qu'une des faces comprend une portion en creux qui entaille profondément le cadre 2. La portion en creux 3 est délimitée par une surface composée de gradins 4 étagés en succession, sensiblement de même diamètre et quelque peu excentrés, c'est-à- dire que la profondeur de la portion en creux (mesurée à partir de la face entaillée du cadre 2) 3 varie par paliers d'une face d'extrémité 5 à l'autre 6 du cadre 2 et que la hauteur des gradins 4 (mesurée d'un gradin à l'autre parallèlement aux faces d'extrémité 5 et 6) est maximale au fond de la portion en creux 3 mais décroît vers les extrémités de ladite portion, au bord du cadre 2. La largeur ou l'épaisseur des gradins 4 (mesurée perpendiculairement aux faces d'extrémité 5 et 6) est égale à l'épaisseur des objets que l'élément de support 1 doit retenir ou à un sous-multiple de leur épaisseur. Ces objets, qui ne sont pas représentés, sont en effet insérés dans la portion en creux 3 en s'empilant les uns sur les autres et en prenant chacun appui sur un des gradins 4. C'est ainsi que s'il y a cinq gradins 4 larges d'un millimètre chacun, on peut empiler cinq objets épais d'un millimètre, ou deux de deux millimètres et un d'un millimètre d'épaisseur, parmi d'autres possibilités. Les gradins 4 sont sensiblement semi-circulaires et ont des diamètres un peu supérieurs à ceux des objets, pour que chacun d'entre eux puisse être retenu par au moins une partie de leur pourtour par un quelconque des gradins 4.

Le cadre 2 est muni de perçages périphériques 7 parallèles au perçage central 3 et qui le traversent également de part en part.

Ils sont destinés à offrir la possibilité d'assembler deux plaquettes ajourées 8 semblables entre elles et qui formeront un empilement avec l'élément 1. Chacune des plaquettes ajourées 8 est munie d'une portion en creux 10 qui vient en prolongement du perçage central 3 et est de plus petites dimensions. Les plaquettes ajourées 8 ont donc pour but de serrer les objets empilés sans intercepter le faisceau de rayonnement et sont également munies de perçages périphériques 11 alignés avec les perçages périphériques 7 : des boulons non représentés sont insérés dans les perçages périphériques 7 et 11 et maintiennent les plaquettes ajourées 8 serrées sur les faces d'extrémité 5 et 6 du cadre 2.

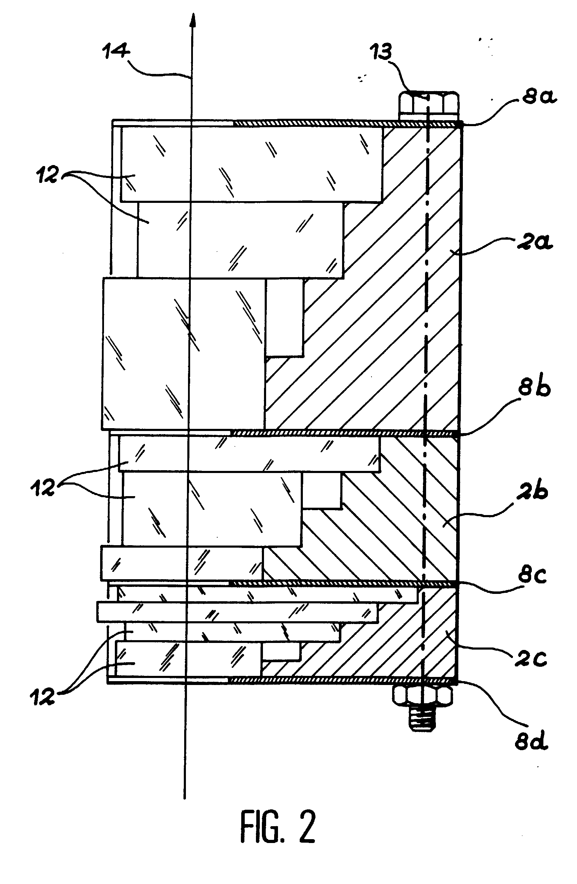

La figure 2 représente un support d'objets 12 composé d'un empilement de trois cadres 2a, 2b et 2c qui alternent avec quatre plaquettes ajourées 8a, 8b, 8c et 8d. Des boulons 13 sont engagés dans les portions en creux et assurent le serrage et la compacité de l'empilement. Le faisceau de rayonnement 14 passe par les portions en creux 3 et 10 et traverse tous les objets 12. On voit que ces derniers ont des épaisseurs et des diamètres variés, d'autant plus que les gradins 4 peuvent avoir des hauteurs et des largeurs différentes pour chacun des cadres 2.

Les plaquettes ajourées intermédiaires 8b et 8c pourraient être omises, ainsi que la plaquette ajourée 8d du côté où la portion en creux 3 du cadre 2c est rétrécie si le gradin 4 immédiatement voisin de la plaquette ajourée 2d ne porte pas d'objet 12.

## Revendications

1. Elément (1) de support d'objets (12) à placer sur une ligne (14) de rayonnement, composé d'un cadre (2) comportant une portion évidée (3) s'élargissant d'une face (5) d'extrémité du cadre à l'autre (6) à travers l'épaisseur du cadre, la portion évidée (3) étant délimitée par une surface du cadre formée d'une succession de gradins (4) étagés, caractérisé en ce que la portion évidée est constituée par une portion entaillée du pourtour du cadre et en ce que les gradins (4) ont une hauteur, mesurée entre gradins et parallèlement aux faces d'extrémité du cadre, variable, maximale au fond de la portion évidée et minimale près de la portion entaillée du pourtour de cadre.

2. Elément de support d'objets (12) selon la revendication 1, caractérisé en ce que les gradins (4) ont une forme semi-circulaire.

3. Support d'objets (12) à placer sur une ligne de rayonnement (14), composé d'au moins un élément (1;2a,2b,2c) selon l'une quelconque des revendications 1 ou 2, et d'au moins une plaquette (8;8a,8b,8c,8d) à portion évidée (10), au moins une desdites plaquettes (8;8a;8d) constituant l'extrémité du support, les éléments (1) et les plaquettes (8) comprenant des perçages périphériques (7, 11) et étant empilés de façon que les portions évidées (3, 10) ainsi que les perçages périphériques (7, 11) soient en prolongement, le support comprenant de boulons (13) s'étendant à travers les perçages périphériques (7,11).

## Patentansprüche

1. Trägerelement (1) für in einem Strahlungsbündel bzw. einer Strahlungslinie (14) anzuordnende Objekte (12), gebildet durch einen Rahmen (2), der sich in einem ausgesparten Teil (3) von einer Endfläche (5) des Rahmens zur anderen (6) quer durch die Dicke des Rahmens verbreitert, wobei der ausgesparte Teil (3) durch eine Rahmenfläche begrenzt wird, die durch eine Folge von stufenförmigen Absätzen (4) gebildet wird,
**dadurch gekennzeichnet,**
daß der ausgesparte Teil bzw. die Aussparung durch einen eingeschnittenen Teil des Rahmenumfangs gebildet wird, und dadurch, daß die Absätze (4), gemessen zwischen den Absätzen und parallel zu den Endflächen des Rahmens, eine variable Höhe haben, maximal im tiefsten Teil der Aussparung und minimal am Rahmenumfang.

2. Trägerelement für Objekte (12) nach Anspruch 1, dadurch gekennzeichnet, daß die Absätze (4) halbkreisförmig sind.

3. Träger von in einer Strahlungslinie (14) anzuordnenden Objekten (12), gebildet durch wenigstens ein Element (1; 2a, 2b, 2c) nach einem der Ansprüche 1 oder 2 und wenigstens einer Platte (8; 8a, 8b, 8c) mit einem ausgesparten Teil (10), wobei wenigstens eine der Platten (8; 8a, 8d) das Ende des Trägers bildet, die Elemente (1) und die Platten (8) periphere Bohrungen (7, 11) aufweisen und so gestapelt sind, daß die ausgesparten Teile (3, 10) sowie die peripheren Bohrungen (7, 11) fluchten, wobei der Träger Schrauben (13) umfaßt, die sich durch die peripheren Bohrungen (7, 11) erstrecken.

## Claims

1. Element (1) of a support for objects (12) to be placed along a line (14) of radiation, composed of a frame (2) having a recessed portion (3) which widens from one end face (5) of the frame to the other (6) through the thickness of the frame, the recessed portion (3) being delimited by a surface of the frame formed by a succession of tiered steps (4), characterized in that the recessed portion consists of a notched portion of the perimeter of the frame and in that the steps (4) have a height, measured between the steps and parallel to the end faces of the frame, which varies, being a maximum at the bottom of the recessed portion and a minimum close to the notched portion of the frame perimeter.

2. Element of a support for objects (12) according to Claim 1, characterized in that the steps (4) have a semicircular shape.

3. Support for objects (12) to be placed along a line of radiation (14), composed of at least one element (1; 2a, 2b, 2c) according to either of Claims 1 and 2, and of at least one insert (8; 8a, 8b, 8c, 8d) with a recessed portion (10), at least one of the said inserts (8; 8a; 8d) constituting the end of the support, the elements (1) and the inserts (8) including peripheral holes (7, 11) and being stacked so that the recessed portions (3, 10) together with the peripheral holes (7, 11) are in alignment, the support including bolts (13) which extend through the peripheral holes (7, 11).
